# EUROPÄISCHE PATENTSCHRIFT

(11) **EP 2 246 643 B1**
(45) Veröffentlichungstag und Bekanntmachung des Hinweises auf die Patenterteilung: **05.06.2019**
(21) Anmeldenummer: 10004239.9
(22) Anmeldetag: 21.04.2010
(51) Int. Cl.: F24S 40/70

(54) **Verfahren zum Betreiben einer Solaranlage mit Drain-Back-System**
Method for operating a solar assembly with drain back system
Procédé de fonctionnement d'une installation solaire dotée d'un système drain-back

(30) Priorität: 30.04.2009 DE 102009019246
(43) Veröffentlichungstag der Anmeldung: 03.11.2010
(73) Patentinhaber: Vaillant GmbH, 42859 Remscheid (DE)
(72) Erfinder: Gößlinghoff, Claus-Heinrich, 42859 Remscheid (DE)

(56) Entgegenhaltungen:
- EP-A2- 0 653 596
- WO-A2-2004/029522
- DE-A1- 19 515 580
- DE-C1- 19 654 037
- US-A- 4 691 692

## Beschreibung

Die Erfindung bezieht sich auf ein Verfahren zum Betreiben einer Solaranlage mit Drain-Back-System.

Bei Solaranlagen mit Auffangbehältern (sogenannte Drain-Back-Systeme; drain-back, engl.: Rückentleerung) befinden sich im Solarkreislauf an einer niedrigen Stelle ein relativ großvolumiger Auffangbehälter und eine Umwälzpumpe. Ist die Umwälzpumpe außer Betrieb, so fließt durch die Schwerkraft das Fluid des Solarkreislaufs in den Auffangbehälter; der Solarabsorber ist dann nur mit Luft gefüllt und kann bei niedrigen Temperaturen nicht einfrieren oder bei fehlender Wärmeabnahme in Stagnation gehen. Unter Stagnation wird das Kochen des Fluids im Solarabsorber verstanden. Das Drain-Back-System sorgt somit für eine automatische Entleerung der Solarabsorber. Durch ein solches Drain-Back-System werden sowohl das Einfrieren als auch die Überhitzung der Anlage vermieden. Der Einsatz von Chemikalien - z.B. Glykol - als Frostschutz erübrigt sich somit. Zum Betrieb des Solarabsorbers wird die Pumpe eingeschaltet. Die Pumpe fördert das Fluid entgegen der Schwerkraft zum Kollektor; hierbei muss die Pumpe Druck aufbauen und zugleich fördern. Ist die höchste Stelle des Solarkreislaufs von Fluid überströmt, so muss die Pumpe nur noch Förderleistung erbringen.

US 4691692 A zeigt eine Solaranlage mit zwei Solarabsorbern und einem Drainbackbehälter, bei welchem stromauf der Absorber Ventile angeordnet sind. Auch DE 19515580 A1 zeigt eine derartige Solaranlage, bei welcher sowohl stromauf, als auch stromab Absperrventile der Absorber angeordnet sind. Am Absorber ist ferner ein Temperaturfühler angeordnet.

EP 653596 A2 zeigt eine thermische Solaranlage mit einem thermischen Speicher sowie eine Drainback-Behälter, bei dem bei Fristgefahr die Verbindung zwischen dem Speicher und dem Solarkollektor abgesperrt wird, um dann das Fluid aus dem Kollektor in den Drainback-Behälter abzuleiten.

Befinden sich in der Solaranlage mehrere Solarabsorber, so ist zum Start der Anlage eine sehr große Pumpenleistung erforderlich, die später im stationären Betrieb nicht mehr benötigt wird.

Der Erfindung liegt die Aufgabe zugrunde, ein Verfahren zum Betreiben einer Solaranlage mit mehreren Solarabsorbern sowie einem Drain-Back-System zu schaffen, das sich durch einen geringen Leistungsbedarf der Umwälzpumpe beim Betriebsstart auszeichnet.

Erfindungsgemäß wird dies gemäß den Merkmalen des unabhängigen Anspruchs 1 dadurch erreicht, dass beim Betriebsstart ein Teil der Absperrventile vorzugsweise alle bis auf ein Absperrventil stromauf der Solarabsorber geschlossen werden, so dass die Umwälzpumpe lediglich das Fluid für einen Solarabsorber entgegen der Schwerkraft fördern muss. Wird der erste Solarabsorber durchflutet, so muss für diesen nur noch die hydraulische Förderleistung aufgebracht werden. Erst dann werden die anderen Solarabsorber sukzessiv oder gleichzeitig zugeschaltet.

Die Erfindung wird nun anhand der Figuren detailliert erläutert, wobei gleiche Bezugszeichen sich auf gleiche Bauteile beziehen. Hierbei zeigen:
- Figur 1: eine Solaranlage für den erfindungsgemäßen Betrieb und
- Figur 2: eine alternative Solaranlage hierfür.

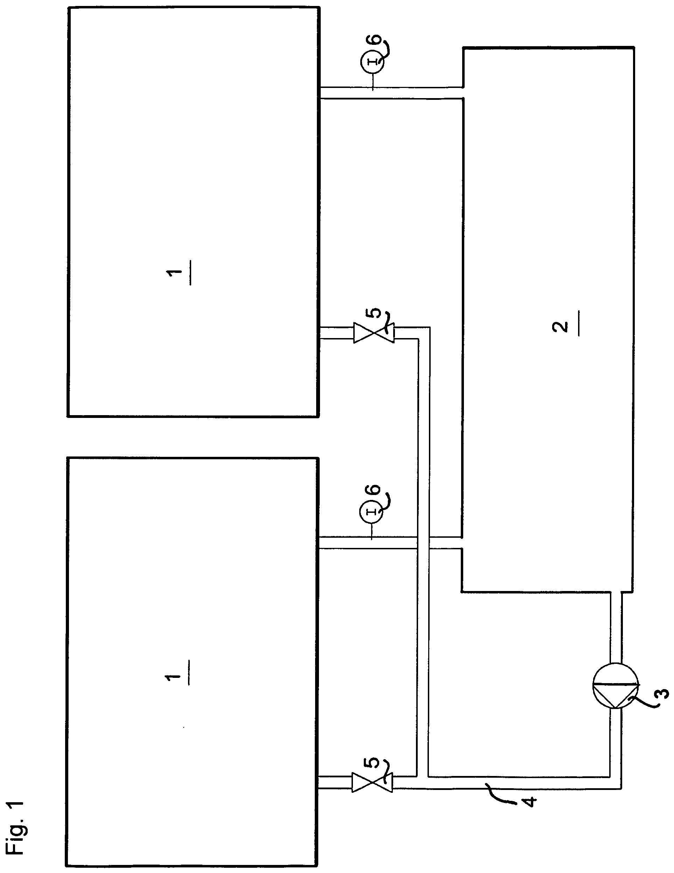

Figur 1 zeigt eine Solaranlage mit mehreren Solarabsorbern 1 in einem Kreislauf mit einem Auffangbehälter 2 (Drain-Back) und einer Umwälzpumpe 3, welche in einer Verbindungsleitung 4 zwischen dem Auffangbehälter 2 und den Solarabsorbern 1 angeordnet ist. Zwischen der Umwälzpumpe 3 und den Solarabsorbern 1 sind stromauf der Solarabsorber 1 Absperrventile 5 angeordnet. Ferner sind stromab der Solarabsorber 1 am Ausgang Temperatursensoren 6 oder andere Sensoren als Strömungswächter und Absperrventile 7 angeordnet.

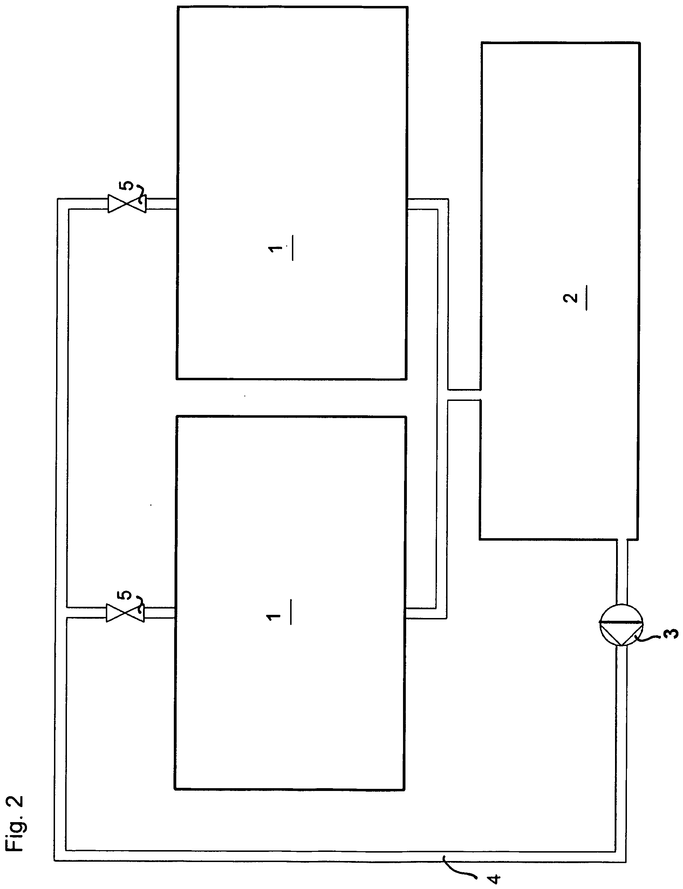

Figur 2 unterscheidet sich von Figur 1 hauptsächlich dadurch, dass die Absperrventile 5 oberhalb der Solarabsorber 1 angeordnet sind.

Zum Starten der Solaranlage werden bis auf das Absperrventil 5 eines einzigen Solarabsorbers 1 die Absperrventile 5 der anderen Solarabsorber 1 geschlossen. Dann wird die Umwälzpumpe 3 in Betrieb genommen, wodurch entgegen der Schwerkraft Fluid nach oben zu den Solarabsorbern gefördert wird. Hat das Fluid den höchsten Punkt erreicht, so fällt dieses aufgrund der Schwerkraft wieder und saugt nachfolgendes Fluid dabei nach oben, so dass die benötigte Pumpenleistung deutlich zurück geht. Wird an dem Temperatursensor 6, der in diesem Fall als Strömungswächter dient, des durchströmten Solarabsorbers 1 eine rasche Temperaturänderung gemessen, so ist dies ein Signal dafür, dass Fluid den Solarabsorber 1 durchströmt hat. Nun wird das Absperrventil 5 des zweiten Solarabsorbers 1 geöffnet, wodurch auch dieser durchströmt wird. Der Vorgang wird fortgesetzt, bis alle Solarabsorber 1 durchflutet sind.

Alternativ kann, nachdem der Temperatursensor 6 des ersten Solarabsorbers 1 eine rasche Temperaturänderung gemessen, das Absperrventil 5 des ersten Solarabsorbers 1 geschlossen werden und das Absperrventil 5 des nächsten Solarabsorbers 1 geöffnet werden. Dieser Vorgang wird entsprechend fortgesetzt, bis alle Solarabsorber 1 durchflutet wurden. Danach werden bei voller Pumpenleistung alle Absperrventile 5 nacheinander geöffnet und die Pumpe auf Nennvolumenstrom geregelt.

Erfindungsgemäß kann anstelle der oben geschilderten Temperaturmessung (Strömungsüberwachung) auch einfach nur eine vorbestimmte Zeit bis zum Zuschalten des nächsten Solarabsorbers gewartet werden. Diese Zeit ist derart zu bestimmen, dass man vom vollständigen Durchfluten eines Solarabsorbers 1 ausgehen kann. Wird relativ wenig Wärme benötigt, so kann erfindungsgemäß auch nur ein Solarabsorber oder eine begrenzte Anzahl Absorber zugeschaltet werden.

Zum Abschalten der Solaranlage wird erst die Umwälzpumpe 3 abgeschaltet. Nach Ablauf einer vorbestimmten Zeit werden die Absperrventile 5 sukzessiv oder gemeinsam geschlossen. Alternativ kann auch aus einer raschen Veränderung der Temperatur der Temperatursensoren 6 darauf geschlossen werden, dass kein Fluid mehr durch die Absorber strömt; die Solarabsorber müssen dann leer sein; die Absperrventile 5 können geschlossen werden, was jedoch nicht zwingend ist. Zusätzlich können die Absperrventile 5 geschlossen werden.

Weiterhin besteht die Möglichkeit aufgrund rascher Temperaturveränderungen nur einzelne Kollektoren durch Schließen der Absperrventile 5 und Öffnen eines (nicht dargestellte) Bypasses während des Betriebs außer Betrieb zu nehmen.

Hierdruch ist eine leistungsregelbare Solaranlage betreibbar, bei der sukzessiv je nach Leistungsbedarf oder im Störungsfall Module zu- oder abgeschaltet werden können.

## Patentansprüche

1. Verfahren zum Betreiben einer Solaranlage mit mehreren Solarabsorbern (1) sowie mindestens einem Auffangbehälter (2) (Drain-Back) und einer Umwälzpumpe (3), welche in einer Verbindungsleitung (4) zwischen dem mindestens einen Auffangbehälter (2) und den Solarabsorbern (1) angeordnet ist, wobei stromauf der Solarabsorber (1) Absperrventile (5) angeordnet sind, **dadurch gekennzeichnet, dass** zum Starten der Solaranlage ein Teil der Absperrventile (5) stromauf der Solarabsorber (1), vorzugsweise alle bis auf ein einzelnes Absperrventil (5), geschlossen werden, die Umwälzpumpe (3) in Betrieb genommen wird und erst nach Ablauf einer vorbestimmten Zeit oder beim Eintritt eines vorbestimmten Ereignisses die anderen Absperrventile (5) sukzessiv oder gemeinsam zugeschaltet werden.

2. Verfahren zum Betreiben einer Solaranlage nach Anspruch 1, **dadurch gekennzeichnet, dass** das vorbestimmte Ereignis das vollständige Durchströmen eines Solarkollektors (1), was anhand eines großen Temperaturgradienten am Temperatursensor (6) am Ausgang des Solarkollektors (1) erkannt wird, ist.

3. Verfahren zum Betreiben einer Solaranlage nach Anspruch 1 oder 2, **dadurch gekennzeichnet, dass** beim Abschalten erst die Umwälzpumpe (3) abgeschaltet wird und erst nach Ablauf einer vorbestimmten Zeit oder beim Eintritt eines vorbestimmten Ereignisses die Absperrventile (5) sukzessiv oder gemeinsam geschlossen werden.

4. Verfahren zum Betreiben einer Solaranlage nach einem der Ansprüche 1 bis 3 mit einem Temperatursensor (6) stromab der Solarabsorber (1), **dadurch gekennzeichnet, dass** das vorbestimmte Ereignis das vollständige Entleeren eines Solarkollektors (1), was anhand eines großen Temperaturgradienten am Temperatursensor (6) oder einem sonstigen äquivalenten Signal eines anderen Strömungswächter am Ausgang eines Solarkollektors (1) oder einer Kollektoreneinheit erkannt wird, ist.

## Claims

1. Method for operating a solar system having several solar absorbers (1) as well as at least one collection vessel (2) (drain back) and a circulation pump (3) which is arranged in a connection line (4) between the at least one collection vessel (2) and the solar absorbers (1), wherein shut-off valves (5) are arranged upstream of the solar absorbers (1), **characterised in that,** to start the solar system, a portion of the shut-off valves (5) are closed upstream of the solar absorbers (1), preferably all up to a single shut-off valve (5), the circulation pump (3) is put into operation and, only after expiry of a predetermined time or on occurrence of a predetermined event, the other shut-off valves (5) are switched on successively or together.

2. Method for operating a solar system according to claim 1, **characterised in that** the predetermined event is the complete throughflow of a solar collector (1) which is recognised by means of a large temperature gradient at the temperature sensor (6) at the exit of the solar collector (1).

3. Method for operating a solar system according to claim 1 or 2, **characterised in that,** on switching off, first the circulation pump (3) is switched off and only after expiry of a predetermined time or on occurrence of a predetermined event, the shut-off valves (5) are closed successively or together.

4. Method for operating a solar system according to any one of claims 1 to 3, having a temperature sensor (6) downstream of the solar absorber (1), **characterised in that** the predetermined event is the complete emptying of the solar collector (1), which is recognised by means of a large temperature gradient at the temperature sensor (6) or another equivalent signal of another flow monitor at the exit of a solar collector (1) or a collector unit.

## Revendications

1. Procédé de fonctionnement d'une installation solaire avec plusieurs absorbeurs solaires (1) ainsi qu'au moins un récipient collecteur (2) (Drain-Back) et une pompe de circulation (3), laquelle est agencée dans une conduite de liaison (4) entre l'au moins un récipient collecteur (2) et les absorbeurs solaires (1), dans lequel des soupapes d'arrêt (5) sont agencées en amont des absorbeurs solaires (1), **caractérisé en ce que** pour le démarrage de l'installation solaire, une partie des soupapes d'arrêt (5) en amont des absorbeurs solaires (1), de préférence toutes à l'exception d'une seule soupape d'arrêt (5), sont fermées, la pompe de circulation (3) est mise en service et seulement après écoulement d'un temps prédéterminé ou lors de la survenue d'un événement prédéterminé, les autres soupapes d'arrêt (5) sont activées successivement ou ensemble.

2. Procédé de fonctionnement d'une installation solaire selon la revendication 1, **caractérisé en ce que** l'événement prédéterminé est la traversée complète d'un collecteur solaire (1), ce qui est détecté à l'aide d'un grand gradient de température au niveau du capteur de température (6) à la sortie du collecteur solaire (1).

3. Procédé de fonctionnement d'une installation solaire selon la revendication 1 ou 2, **caractérisé en ce que** lors de la déconnexion, la pompe de circulation (3) est d'abord désactivée et seulement après écoulement d'un temps prédéterminé ou lors de la survenue d'un événement prédéterminé, les soupapes d'arrêt (5) sont fermées successivement ou ensemble.

4. Procédé de fonctionnement d'une installation solaire selon l'une quelconque des revendications 1 à 3 avec un capteur de température (6) en aval des absorbeurs solaires (1), **caractérisé en ce que** l'événement prédéterminé est le vidage total d'un collecteur solaire (1), ce qui est détecté à l'aide d'un grand gradient de température au niveau du capteur de température (6) ou d'un autre signal équivalent d'un autre contrôleur de débit à la sortie d'un collecteur solaire (1) ou d'une unité de collecteur.
